# EUROPÄISCHE PATENTSCHRIFT

(11) **EP 3 854 521 B1**
(45) Veröffentlichungstag und Bekanntmachung des Hinweises auf die Patenterteilung: **26.04.2023**
(21) Anmeldenummer: 21153411.0
(22) Anmeldetag: 26.01.2021
(51) Int. Cl.: B23Q 11/08, B23Q 17/24, G02B 27/00, G03B 17/08

(54) **KAMERASYSTEM MIT EINER DREIDIMENSIONALEN, ROTIERBAREN KAMERAEINHAUSUNG UND VERFAHREN ZU SEINEM BETRIEB**
CAMERA SYSTEM WITH A THREE DIMENSIONAL ROTATABLE CAMERA HOUSING AND METHOD OF OPERATION OF SAID SYSTEM
SYSTÈME DE CAMÉRA DOTÉ D'UN BOÎTIER DE CAMÉRA ROTATIF À TROIS DIMENSIONS ET SON PROCÉDÉ DE FONCTIONNEMENT

(30) Priorität: 27.01.2020 DE 102020101883
(43) Veröffentlichungstag der Anmeldung: 28.07.2021
(73) Patentinhaber: Irlbacher Blickpunkt Glas GmbH, 92539 Schönsee (DE)
(72) Erfinder: Irlbacher, Günther, 92539 Schönsee (DE)
(74) Vertreter: Hinkelmann, Klaus

(56) Entgegenhaltungen:
- DE-A1-102016 108 247
- JP-A- H09 212 758
- US-A1- 2007 217 782
- US-A1- 2014 036 132

## Beschreibung

Die Erfindung betrifft ein Kamerasystem mit mindestens einer Kamera; einer in einem Sichtfeld vor der Kamera angeordneten, zumindest teilweise transparenten, dreidimensionalen, rotierbaren Kameraeinhausung; und einer Antriebseinrichtung für die Rotation der Kameraeinhausung. Die Erfindung betrifft auch ein Verfahren zum Betrieb dieses Kamerasystems.

Die Überwachung von Örtlichkeiten, insbesondere Produktionsanlagen, bei deren Betrieb Wasser oder andere Flüssigkeiten, z.B. Kühlflüssigkeit, Schmierflüssigkeit, auftreten, oder aber feste Verunreinigungen ist von großer Bedeutung. Diese können die Funktionsweise der Kamera, insbesondere auch deren Sichtfeld, das auf eine zu überwachende Maschine gerichtet ist, so dass beispielsweise ein darin ablaufender Produktionsprozess beobachtet oder registriert werden kann, beeinträchtigen. Das Linsensystem einer Kamera wird bei derartigen Überwachungen in der Regel durch eine mindestens teilweise transparente ebene oder gebogene Scheibe geschützt, wobei sich der transparente Teil insbesondere vor dem Sichtfeld der Kamera befindet, bzw. so ausgestaltet ist, dass ein gewünschtes Sichtfeld überwacht werden kann. Die bei Produktionsprozessen häufig anfallenden festen oder fluiden Stoffe lagern sich häufig auf einer solchen Scheibe ab, so dass es zu einer Beeinträchtigung des Sichtfeldes kommt. Es ist daher erforderlich, die Scheibe mehr oder weniger häufig zu reinigen. Hierzu sind verschiedene Maßnahmen bekannt. So kann ggf. ein Wischersystem die Scheibe regelmäßig oder auf Aufforderung reinigen. Dieser Vorgang kann durch Aufspritzen einer Reinigungsflüssigkeit unterstützt werden. Gegebenenfalls kann auch eine bloße Beaufschlagung mit einer Reinigungsflüssigkeit für eine ausreichende Reinigung sorgen. Eine solche Reinigungsart benötigt jedoch ein ggf. störungsanfälliges Wischersystem und/oder die Bereitstellung einer Reinigungsflüssigkeit.

Allerdings sind auch rotierende Sichtfenster bekannt, bei denen eine Reinigung durch Abschleudern von flüssigen oder festen Belägen aufgrund einer hohen Umdrehungszahl des Sichtfensters stattfindet. Mit hoher Drehzahl rotierende Glasscheiben werden auch als Kent-Scheiben bezeichnet und finden z.B. in der Schifffahrt, aber auch zur Überwachung von Produktionsunterlagen Anwendung, da eine Verwendung von Scheibenwischern häufig nicht ausreicht. Es sind überdies auch rotierende Sichtfenster bekannt, die zusammen mit einer Kamera verwendet werden, da hierdurch Überwachungen mittels einer Kamera sowie Aufzeichnungen möglich sind.

Die Veröffentlichung DE 3532362 C2 beschreibt eine Klarsichtscheibe mit zwei Fensterscheiben, von denen die außenliegende zweite Fensterschreibe mit hoher Drehzahl umläuft, so dass auftreffendes Wasser etc. durch die Zentrifugalkraft nach außen geschleudert wird und lediglich ein dünner Wasserfilm zurückbleibt, der keine Sichtbehinderung mehr gibt.

Die Veröffentlichung DE 10 2008 045 793 B4 beschreibt ein rotierendes Sichtfenster, das in oder auf ein vorhandenes Fenster einer Werkzeugmaschine, der Frontscheibe auf der Brücke eines Schiffes usw. montierbar ist, und der Sichtverbesserung durch Wegschleudern von Flüssigkeiten und/oder anderen Stoffen dient. Der Rotor des ausgeführten Elektronikmotors oder des phasenverschobenen Schrittmotors in einer Baueinheit, bestehend aus Rotorsichtscheibe und ringförmigen angeordneten Magneten ist glockenförmig und so ausgebildet, dass der Rotor mit den darauf befestigten Magneten durch Verschieben in Richtung der Rotationsachse einfach in die versetzt ringförmig im Stator angeordneten Spuleneinheiten eingeführt werden kann und der Rotor bzw. die Rotationsscheibe mit dem Entfernen der Befestigungsschraube leicht ausgetauscht und/oder gereinigt werden kann.

Die Veröffentlichung DE 10 2010 061 587 A1 beschreibt ein Sichtfenster mit einem ringförmigen Statorträger, der einen Stator enthält, mit einem zentralen Lager, einer durchsichtigen Schleuderscheibe, die an dem Lager drehbar gelagert ist, mit einem Rotor, der mit dem Rand der Schleuderscheibe verbunden ist, wobei zwischen dem Stator und dem Rotor ein Luftspalt festgelegt ist und Rotor und Stator einen Elektromotor bilden, der als Scheibenläufermotor ausgebildet ist.

Die Veröffentlichung DE 10 2017 120 138 B4 beschreibt eine Klarsichtscheibe, insbesondere für Maschineneinhausungen, mit einer ersten durchsichtigen Scheibe, mit einer zweiten durchsichtigen Scheibe, mit einer an der ersten Scheibe gehaltenen Lagereinrichtung, die mit der zweiten Scheibe verbunden ist, um diese in einem Abstand zu der ersten Scheibe zu halten und drehbar zu lagern, mit einer an der ersten Schreibe gehaltenen Antriebseinrichtung, die zum drehenden Antreiben der zweiten Scheibe mit dieser verbunden ist und die einen Anschluss zur Energieversorgung aufweist, mit einer an einer Seite der ersten Scheibe angeordneten Kamera, die ein erstes Objektiv aufweist, dessen Blickrichtung durch die zweite Scheibe gerichtet ist, wobei die Kamera zur Energieversorgung mit der Klarsichtscheibe verbunden ist, die Antriebseinrichtung eine Steuerschaltung aufweist, die in einem ringförmigen Gehäuse untergebracht ist, und die Kamera auf einem Träger angeordnet ist, der sich von dem Gehäuse ausgehend radial nach innen erstreckt.

Die Veröffentlichung WO 2018/049137 A1 beschreibt ein Drehfenster ("spin window"), umfassend ein rotierbares, transparentes Fenster beinhaltend einen äußeren Kantenteil und eine erste zentrale longitudinale Achse; eine rotierbare Krempe/Fassung, die an den äußeren Randteil des rotierbaren transparenten Fensters gekoppelt ist und eine zweite zentrale longitudinale Achse enthält, die koinzident ist mit der ersten zentralen longitudinalen Achse; und eine Kamera, worin mindestens ein Teil der Kamera direkt radial inwärts von der drehbaren Fassung positioniert ist.

Die Veröffentlichung DE 20 2017 105 583 U1 beschreibt ein Sichtfenster für einen Arbeitsraum einer Bearbeitungsmaschine mit einer ersten Scheibe, auf der wenigstens bereichsweise eine Auflage aus einer transparenten Keramik aufgebracht ist, wobei durch die Auflage ein Kratz- und/oder Schleifschutz zur Bewahrung der Oberflächengüte des Sichtfensters ausgebildet ist und zwischen der Auflage und der ersten Scheibe eine transparente Verbindungslage angeordnet ist. Beschrieben ist auch ein Rotationsfenster einer Bearbeitungsmaschine, welches dieses Sichtfenster aufweist.

Das US-Patent US 3 879 742 A beschreibt eine wetterfeste Umhüllung für eine Videokamera oder ähnliches mit einem Fensterreiniger aufgrund zentrifugaler Reinigung. Dabei hat ein Gehäuse trennbare obere und untere Gehäuseteile und ein vorderseitiges Ende, ein drehbares, auf diesem vorderseitigen Ende montiertes transparentes Fenster, und Antriebsmittel für die Rotation des Fensters mit einer hohen Winkelgeschwindigkeit.

Die Veröffentlichung US 6 607 606 B2 beschreibt einen Apparat für die Abschirmung der Sicht einer optischen Vorrichtung vor Störungen durch unerwünschte Verunreinigungen, umfassend unter anderem: eine transparente Abschirmung, die angeordnet ist, um die optische Vorrichtung vor Verunreinigungen zu schützen; einen Wischer, der im Kontakt mit dieser Abschirmung so positioniert ist, dass er das Gesichtsfeld nicht beeinträchtigt; einen Rotationsmechanismus für die Bewirkung einer Rotation der Abschirmung; und einen Kontroller für die Aktivierung und Deaktivierung des Rotationsmechanismus. In Ausführungsformen verfügt der Apparat über ein System zur automatischen Detektion von Verunreinigungen und über einen Applikator für Reinigungsflüssigkeiten.

Die Veröffentlichung US 2007 / 0 217 782 A1, die die Basis für den Oberbegriff des Anspruchs 1 bildet, beschreibt ein Umweltschutzsystem zur Bereitstellung eines Umgebungsschutzes für mindestens einen Sensor mit einem Sichtfeld und einer zentralen Achse für das Sichtfeld, umfassend: eine volumetrische Umhüllung, die eine Oberflächenkrümmung aufweist und den mindestens einen Sensor enthält, wobei die volumetrische Umhüllung für den Sensor im Wesentlichen transparent ist; und einen Motor, der das volumetrische Gehäuse um eine Drehachse dreht, um einen konstanten Abstand zwischen dem volumetrischen Gehäuse und dem Sensor aufrechtzuerhalten, mit einer Geschwindigkeit, die ausreicht, um das Anhaften und die Akkumulation von Umgebungselementen wie Wasser und Staub an einer Außenfläche des volumetrischen Gehäuses zu verhindern. In einer Ausführungsform ist die Oberfläche der volumetrischen Hülle hydrophob. Zudem enthält bei einer weiteren Ausführungsform das volumetrische Gehäuse eine Vielzahl von Sensoren, die jeweils ein Sichtfeld und eine zentrale Achse für das Sichtfeld haben, wobei die Rotationsachse mit der Mittelachse für das Sichtfeld mindestens eines Sensors kongruent ist.

Allerdings ist bei den bekannten rotierenden Sichtscheiben das Sichtfeld nicht nur durch die Größe des Sichtfensters beschränkt, sondern auch durch den Umstand, dass sich die rotierende Sichtscheibe im Allgemeinen in einer größeren Scheibe oder Wand befindet, so dass die Möglichkeiten für den Einsatz einer Kamera beschränkt sind. Aus diesem Grund ist auch der Aufbau eines solchen Kamerasystems komplex. Eine geringe Größe des Kamerasystems lässt sich auf diese Weise nicht realisieren:
Aufgabe der Erfindung war es vor diesem Hintergrund, ein Kamerasystem bereitzustellen, bei dem ein größeres Sichtfeld mittels einer Kamera beobachtet werden kann, wobei das Sichtfeld der Kamera möglichst wenig durch im Beobachtungsraum auftretende feste und/oder flüssige Verunreinigungen, die sich prinzipiell auf der Kamera oder einer Kameraeinhausung abscheiden und zu Einschränkungen der Sichtbarkeit durch das Kamerasystem führen können, beeinträchtigt ist. Vorzugsweise soll das Kamerasystem aufgrund seines Aufbaus eine große Beständigkeit und somit einen großen Einsatzbereich ermöglichen und vorzugsweise gleichzeitig einfach und kostengünstig herzustellen sein. Aufgabe der Erfindung war außerdem die Bereitstellung eines Verfahrens zum Betrieb eines solchen Kamerasystems.

Die Lösung dieser Aufgabe wird nach dieser Erfindung erreicht durch ein Kamerasystem sowie ein Verfahren zu seinem Betrieb mit den Merkmalen der entsprechenden Patentansprüche 1, 12.

Bevorzugte Ausführungsformen des erfindungsgemäßen Kamerasystems sind in entsprechenden abhängigen Patentansprüchen aufgeführt.

Gegenstand der Erfindung ist somit ein Kamerasystem, enthaltend mindestens eine Kamera; eine in einem Sichtfeld vor der Kamera angeordnete, zumindest teilweise transparente, dreidimensionale, rotierbare Kameraeinhausung; und eine Antriebseinrichtung für die Rotation der Kameraeinhausung, wobei die Kameraeinhausung einen zumindest teilweise transparenten Zylinder mit einem im Wesentlichen kreisrunden Querschnitt beinhaltet, der an einem ersten Ende ein flaches oder gebogenes erstes Abschlusselement aufweist, wobei die Kameraeinhausung Glas enthält oder aus Glas besteht und der Zylinder an einem zweiten Ende ein flaches oder gebogenes zweites Abschlusselement aufweist, das mit der Antriebseinrichtung verbunden ist.

Die rotierbare Kameraeinhausung kann verschieden ausgestaltet sein. Vorzugsweise hat jedoch eine Querschnittsfläche senkrecht zu einer Rotationsachse der Kameraeinhausung eine runde Form. Dabei kann die Größe der Querschnittsfläche in Richtung der Rotationsachse der Kameraeinhausung variieren. Beispielsweise kann die Größe der Querschnittsfläche kontinuierlich abnehmen, was z.B. für die Ausgestaltung der Kameraeinhausung als Dom gilt. Erfindungsgemäß beinhaltet die Kameraeinhausung des erfindungsgemäßen Kamerasystems einen zumindest teilweise transparenten Zylinder mit einem im Wesentlichen kreisrunden Querschnitt, der an einem ersten Ende ein flaches oder gebogenes erstes Abschlusselement beinhaltet. Hierbei bedeutet im Wesentlichen kreisrunder Querschnitt im Allgemeinen, dass der Querschnitt einen Kreis oder eine Ellipse mit einem Achsenverhältnis im Bereich von 1 bis 1,5 bildet. Ein kreisrunder Querschnitt ist besonders bevorzugt. Die Abmessungen der Kameraeinhausung hängen von der Art und Anzahl der Kamera(s), dem mittels der Kamera zu überwachenden Bereich bzw. Beobachtungsraum sowie den Aufstellbedingungen ab. Für den erfindungsgemäßen Fall, dass die Kameraeinhausung des Kamerasystems einen zumindest teilweise transparenten Zylinder mit einem im Wesentlichen kreisrunden Querschnitt beinhaltet, der an einem ersten Ende ein flaches oder gebogenes erstes Abschlusselement aufweist, ist eine Länge L des Zylinders vorzugsweise größer als eine maximale Höhe H des flachen oder gebogenen ersten Abschlusselementes in Richtung der Zylinderachse. Mehr bevorzugt beträgt das Verhältnis L/H mindestens 1,5 und insbesondere mehr als 3.

Das erste Abschlusselement kann undurchsichtig, teilweise transparent oder vollkommen transparent sein. Es kann außerdem fest oder abnehmbar am Zylinder angebracht sein, wobei die Anbringung beispielsweise durch Ankleben oder Anschrauben vorgenommen sein kann. Vorzugsweise ist das erste Abschlusselement abnehmbar am Zylinder angebracht.

In einer bevorzugten Ausführungsform des Kamerasystems sind der Zylinder und das erste Abschlusselement einstückig ausgebildet.

Das Material der Kameraeinhausung kann beliebig gewählt werden, solange in der Kameraeinhausung eine ausreichende, zumindest teilweise vorliegende Transparenz erreicht werden kann. Ein geeignetes Material der Kameraeinhausung umfasst daher ein Glas und ggf. einen Kunststoff, wie z.B. Polycarbonat, oder eine Glaskeramik. Erfindungsgemäß enthält die Kameraeinhausung Glas oder besteht aus Glas. Vorzugsweise besteht zumindest der Zylinder aus Glas.

Glas bietet eine gute Beständigkeit gegenüber zahlreichen festen und flüssigen Stoffen sowie auch eine gute Witterungsbeständigkeit und gewährleistet somit den Schutz des Kamerasystems. Der Einsatz eines solchen Kamerasystems hat den Vorteil, dass durch die UV-Beständigkeit von Glas die erfindungsgemäße Bedieneinheit auch in Bereichen gut einsetzbar ist, die beispielsweise einer UV-Bestrahlung, insbesondere einer intensiven UV-Bestrahlung, ausgesetzt sind. Außerdem kann eine Kameraeinhausung besonders gut gereinigt werden, wenn sie Glas enthält oder aus Glas besteht. Dies gilt zumindest für die Teile der Kameraeinhausung, die aus Glas bestehen.

Die Kameraeinhausung und insbesondere ein in ihr enthaltener Zylinder hat im Allgemeinen eine Dicke von 1 bis 10 mm, vorzugsweise von 2 bis 5 mm, und besonders bevorzugt von 3 bis 4 mm. Vorzugsweise wird Floatglas oder gezogenes Glas verwendet.

Das verwendete Glas enthält bevorzugt eine ESD-Schutzschicht zur Vorbeugung gegen elektrostatische Entladung (ESD, electrostatic discharge).

Weiterhin ist es erfindungsgemäß bevorzugt, dass die Kameraeinhausung aus gehärtetem Einscheiben-Sicherheitsglas besteht. Dadurch wird eine kratzfeste Oberfläche und hohe mechanische Festigkeit erzielt. Somit ist eine Vielzahl von Einsatzmöglichkeiten gegeben.

Erfindungsgemäß ist ein Kamerasystem bevorzugt, bei dem der Zylinder an einem zweiten Ende ein flaches oder gebogenes zweites Abschlusselement beinhaltet, das mit einer Antriebseinrichtung verbunden ist. Dabei ist wiederum ein Kamerasystem bevorzugt, bei dem ein Rotor der Antriebseinrichtung, insbesondere eines Elektromotors, mit dem zweiten Abschlusselement verbunden ist. Dies ermöglicht, dass eine Rotationsbewegung des Rotors mittelbar oder unmittelbar auf die Einhausung übertragen wird. Das flache oder gebogene zweite Abschlusselement weist dabei häufig eine zentrale Öffnung auf, die beispielsweise für eine Kabelverbindung der Kamera verwendet werden kann.

In einer bevorzugten Ausführungsform ist die Kameraeinhausung zumindest teilweise mit einer hydrophoben, oleophoben oder hydrophilen Beschichtung, einer Antireflexbeschichtung, einer bioaktiven Beschichtung oder einer lichtbrechenden Beschichtung versehen. Dabei kann die Beschichtung, insbesondere eine hydrophile Beschichtung, auch photokatalytisch, beispielsweise mit TiO₂, ausgestaltet sein. Eine solche

Beschichtung kann die Abschleuderbarkeit von festen oder flüssigen Abscheidungen auf der Oberfläche der Kameraeinhausung verbessern und/oder die Neigung zu einer solchen Abscheidung verringern. Jedenfalls wird die Beschichtung geeignet in Hinblick auf den Einsatzbereich der Kameraeinhausung ausgewählt.

Die im erfindungsgemäßen Kamerasystem verwendete Kamera, insbesondere ein dafür verwendetes digitales Kameramodul, kann verschieden ausgestaltet sein. Im erfindungsgemäßen Kamerasystem, in die Kameraeinhausung integriert, können überdies mehrere solcher Kameras enthalten sein, um z.B. einen größeren Sichtbereich und/oder verschiedene Spektralbereiche abzudecken. So können eine oder mehrere Kameras verwendet werden, die für die Erfassung im sichtbaren Spektralbereich oder Infrarotbereich (Infrarot-Kamera) vorgesehen sind. Die IR-Kamera eignet sich dabei insbesondere auch zur Wärmedetektion.

Die mindestens eine Kamera kann verschieden ausgerichtet sein, wobei sich die Ausrichtung auf die Richtung einer zentralen Linsensystemachse bezieht, die das Sichtfeld der Kamera bestimmt. Es können feste Ausrichtungen der Kamera, z.B. senkrecht, parallel oder schräg zu einer Rotationsachse der Kameraeinhausung realisiert werden. Alternativ kann die mindestens eine Kamera auch drehbar ausgestaltet sein, um die Überwachungs- und Aufzeichnungsmöglichkeiten durch die Kamera(s) zu erhöhen. Die Ausrichtung der Kamera bzw. die Ausrichtungsmöglichkeiten der Kamera bestimmen im Allgemeinen Größe und Lage von mindestens einem transparenten Bereich der Kameraeinhausung.

In einer Ausführungsform des erfindungsgemäßen Kamerasystems ist eine zentrale Linsensystemachse der Kamera senkrecht zu einer Rotationsachse der Kameraeinhausung angeordnet.

Beim erfindungsgemäßen Kamerasystem ist es besonders bevorzugt, dass eine äußere Oberfläche der Kameraeinhausung mindestens eine strukturelle Ausprägung aufweist. Dabei ist es in einer Ausführungsform bevorzugt, dass die strukturelle Ausprägung mindestens eine Erhebung aufweist. Eine Erhebung ist dabei im Allgemeinen ein sich aus der Oberfläche erhebendes, d.h. aus der Oberfläche herausragendes Strukturelement. Vorzugsweise ist die mindestens eine Erhebung eine Silikonraupe. Die Silikonraupe kann beispielsweise angeklebt sein.

In einer bevorzugten Ausführungsform des Kamerasystems weist die strukturelle Ausprägung mindestens eine Vertiefung auf. Dabei ist es wiederum bevorzugt, dass die Vertiefung eine Nut in der äußeren Oberfläche ist. Bei der Vertiefung handelt es sich vorzugsweise um eine Nut in einem Glaszylinder. Die Nut wird dabei im Allgemeinen in den Glaszylinder eingeschliffen, wobei eine Nutoberfläche glatt oder mattiert ausgestaltet sein kann. Falls im Kamerasystem vorhanden, ist die Nut vorzugsweise eine Rundnut, eine V-Nut, eine gerade Nut oder eine asymmetrische Nut, z.B. eine Tangentennut.

Da erfindungsgemäß ein Zylinder mit einem im Wesentlichen kreisrunden Querschnitt, der an einem ersten Ende ein flaches oder gebogenes erstes Abschlusselement beinhaltet, verwendet wird, erstrecken sich die strukturellen Ausprägungen vorzugsweise entlang des Zylindermantels, vorzugsweise über die gesamte Länge des Zylindermantels. Dabei können die strukturellen Ausprägungen parallel zur Rotationsachse des Zylinders oder schräg dazu angeordnet sein.

Die im erfindungsgemäßen Kamerasystem eingesetzte Antriebseinrichtung kann beispielsweise ein Elektromotor oder eine pneumatische Vorrichtung sein. Erfindungsgemäß ist die Antriebsvorrichtung vorzugsweise ein Elektromotor. Neben einer Energieversorgung des Elektromotors per Kabel ist es auch möglich, die Kamera über ein magnetisches Wechselfeld mit Energie zu versorgen. Dies kann z.B. dadurch realisiert werden, dass an der rotierenden Kameraeinhausung Permanentmagnete angeordnet sind, die mit der Kamereinhausung mitrotieren und an der Kamera Induktionsspulen angeordnet sind. Die Permanentmagnete können hierbei auch Teil des Elektromotors sein.

Erfindungsgemäß ist ein Kamerasystem bevorzugt, bei dem die Antriebseinrichtung, insbesondere wenn sie ein Elektromotor ist, eine Hohlwelle zur Aufnahme eines oder mehrerer Kabel für die Kamera, d.h. für deren Energieversorgung und/oder Datenübertragung, aufweist. Dabei weist das zweite Abschlusselement im Allgemeinen eine zentrale Öffnung für die Durchführung des Kabels zur Kamera auf.

Allerdings kann im erfindungsgemäßen Kamerasystem prinzipiell auf eine Kabelverbindung der Kamera verzichtet werden. Beispielsweise kann eine Energieversorgung der Kamera per Batterie oder Akku vorgesehen sein. Ebenso kann eine Datenübertragung beispielsweise per Funk erfolgen.

Vorzugsweise weist die Kameraeinhausung auch einen Sensor zur Feststellung von auf der Kameraeinhausung befindlichen Niederschlägen, z.B. Tropfen, insbesondere in einem für das Sichtfeld der Kamera wichtigen transparenten Bereich, auf. Hierzu enthält die Kameraeinhausung vorzugsweise z.B. einen Tropfen- oder Beschlagsensor.

In Ausführungsformen der Erfindung kann eine Beaufschlagung der Kameraeinhausung mit Tropfen auch mittels Piezoschalleinkopplung beseitigt werden, indem diese Tropfen aufgrund der Piezoschalleinkopplung zum Ablaufen gebracht werden. Prinzipiell kann auch eine Hochfrequenzreinigung bzw. Ultraschallreinigung durchgeführt werden.

In alternativen oder ergänzenden Ausführungsformen befindet sich im Kamerasystem eine Spüldüse außerhalb der Kameraeinhausung. Diese dient insbesondere zur Unterstützung der Reinigung, indem durch Anwendung einer geeigneten Spielflüssigkeit Verschmutzungen der äußeren Oberfläche beseitigt werden können.

Schließlich kann eine Reinigung der Kameraeinhausung auch durch Verwendung einer mechanischen Reinigungsvorrichtung unterstützt werden, z.B. einer Mikrofaserrolle oder einer Gummilippenrolle, welche in Kontakt mit der Kameraeinhausung gebracht wird, also also Wischersystem fungiert. Dabei kann die Kameraeinhausung ggf. auch mit einer vergleichsweise geringen, bezogen auf die zum Abschleudern üblicherweise verwendete Umdrehungsgeschwindigkeit, betrieben werden. Eine solche mechanisch unterstützte Reinigung kann überdies noch durch den Einsatz einer Reinigungsflüssigkeit unterstützt werden, die über eine separate Spüleinheit oder integriert in die mechanische Reinigungsvorrichtung bereitgestellt wird.

Beim erfindungsgemäßen Kamerasystem kann vorzugsweise in der oder an der Kameraeinhausung eine Beleuchtung angebracht sein, die insbesondere dazu dient, den Betrachtungsraum zu beleuchten.

Die erfindungsgemäß eingesetzte Kameraeinhausung ist vorzugsweise schwimmend gelagert.

Die Erfindung betrifft außerdem ein Verfahren zum Betrieb eines Kamerasystems, enthaltend mindestens eine Kamera; eine in einem Sichtfeld vor der Kamera angeordnete, zumindest teilweise transparente, dreidimensionale, rotierbare Kameraeinhausung; und eine Antriebseinrichtung für die Rotation der Kameraeinhausung, wobei die Kameraeinhausung einen zumindest teilweise transparenten Zylinder mit einem im Wesentlichen kreisrunden Querschnitt beinhaltet, der an einem ersten Ende ein flaches oder gebogenes erstes Abschlusselement aufweist, wobei die Kameraeinhausung Glas enthält oder aus Glas besteht und der Zylinder an einem zweiten Ende ein flaches oder gebogenes zweites Abschlusselement aufweist, das mit der Antriebseinrichtung verbunden ist, umfassend einen Schritt des Rotierens der Kameraeinhausung durch Betrieb der Antriebseinrichtung mit einer vorbestimmten Umdrehungszahl. Diese Umdrehungszahl wird im Allgemeinen so gewählt, dass sie zum Abschleudern von flüssigen und/oder festen Belägen auf der Kameraeinhausung ausreicht. In einer bevorzugten Ausführungsform des erfindungsgemäßen Verfahrens liegt die Umdrehungszahl im Bereich von 1000 bis 2000 Umdrehungen pro Minute (UpM).

Die Erfindung hat zahlreiche Vorteile. So ermöglicht es das erfindungsgemäße Kamerasystem, dass sehr unterschiedliche Arbeitsräume, in denen Wasser und/oder andere Flüssigkeiten und/oder Feststoffe auftreten und sich auf einer Kamera oder deren Einhausung niederschlagen können, besser mittels einer Kamera überwacht werden können. Dies ist insbesondere aufgrund der möglichen kompakten Bauweise des Kamerasystems möglich. Dabei ist auch die Einstellung eines großen Sichtbereiches für die Kamera möglich. Ein durch flüssige oder feste Belege einschließlich Tropfen verunreinigte Kameraeinhausung kann überdies auf leichte und effiziente Weise sauber gehalten oder gereinigt werden, so dass die Funktion der Kamera sichergestellt ist.

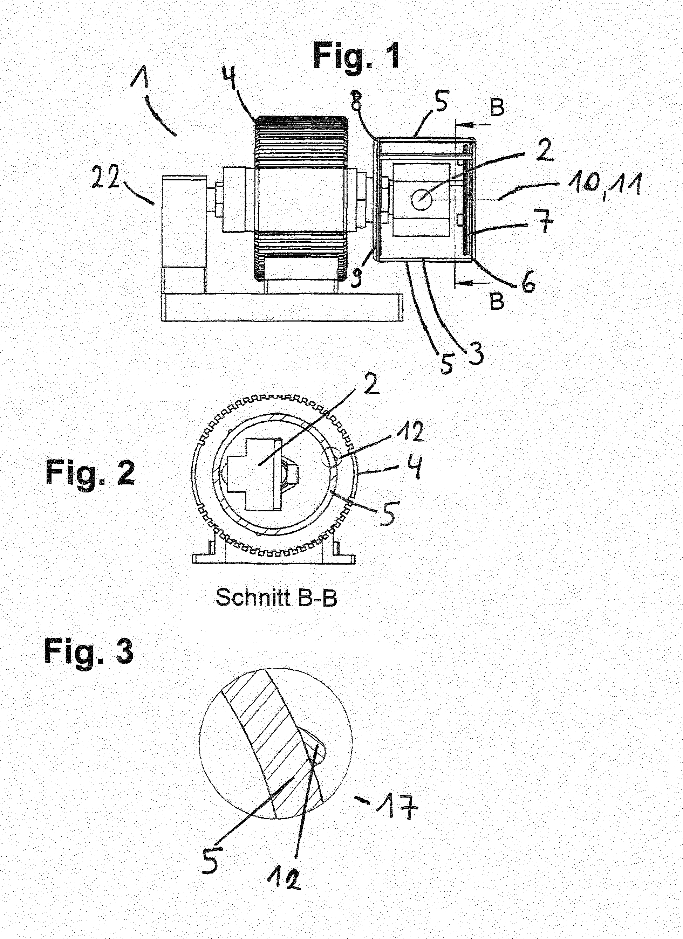

Die Erfindung wird im Folgenden anhand von mehreren nicht einschränkend gemeinten Ausführungsbeispielen für ein erfindungsgemäßes Kamerasystem illustriert, das besonders gut für die Überwachung eines Raums, in dem es zu Verschmutzungen einer Kamereinhausung kommt, geeignet ist. Dabei wird Bezug genommen auf die Figuren 1 bis 11.

Fig. 1 zeigt einen Querschnitt durch ein erfindungsgemäßes Kamerasystem mit einer Schnittlinie B-B.

Fig. 2 zeigt einen Schnitt durch die Kameraeinhausung entsprechend der in Fig. 1 gezeigten Schnittlinie B-B.

Fig. 3 zeigt eine vergrößerte Ansicht eines Details aus Fig. 2.

Fig. 4 zeigt einen Querschnitt durch ein erfindungsgemäßes Kamerasystem mit einer Schnittlinie A-A.
des Elektromotors 4 und 11 die Rotationsachse der Kameraeinhausung 3. Beide Achsen sind hier identisch. Der Zylinder 5 weist an einem zweiten Ende 8 ein flaches zweites Abschlusselement 9 auf, das hier mit dem Zylinder 5 verklebt ist, und außerdem mit dem Elektromotor 4 verbunden ist.

Fig. 2 zeigt einen Schnitt durch die Kameraeinhausung 3 entsprechend der in Fig. 1 gezeigten Schnittlinie B-B. 2 bedeutet die Kamera, 4 bedeutet den Elektromotor und 12 eine Erhebung aus der Oberfläche des Glaszylinders 5.

Fig. 3 zeigt eine vergrößerte Ansicht der Erhebung 12 aus Fig. 2, die hier eine Silikonraupe ist.

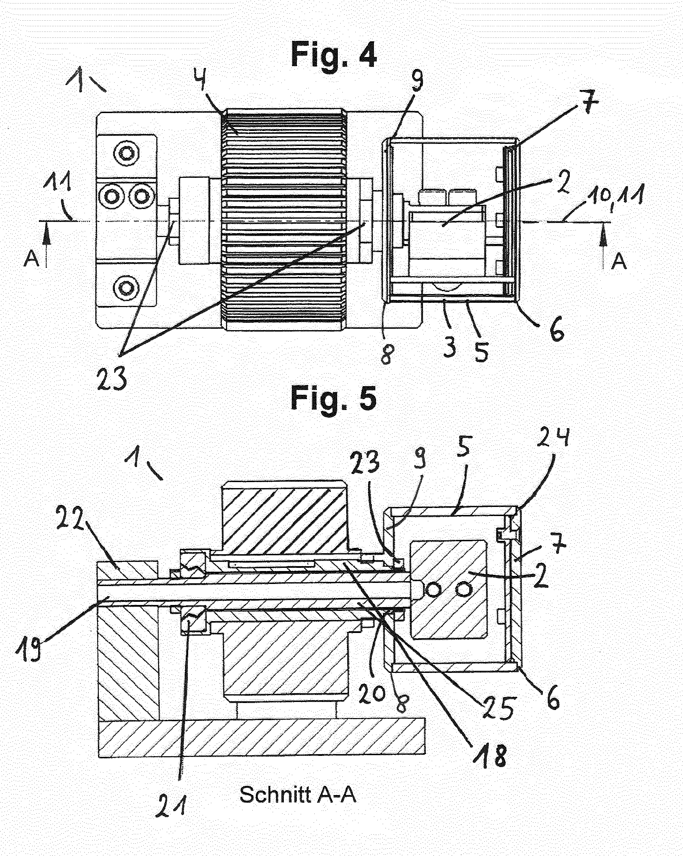

Fig. 4 zeigt einen Querschnitt durch ein erfindungsgemäßes Kamerasystem 1 mit einer Schnittlinie A-A. Ein Elektromotor 4 dient hier als Antriebseinrichtung für eine rotierbare Kameraeinhausung 3, die bei der hier gezeigten Ausführungsform einen transparenten Zylinder 5 mit einem kreisförmigen Querschnitt aufweist, der an einem ersten Ende 6 ein abnehmbares flaches erstes Abschlusselement 7 beinhaltet. 10 bedeutet die Rotationsachse des Elektromotors 4 und 11 die Rotationsachse der Kameraeinhausung 3, wobei beide Achsen identisch sind. Der Zylinder 5 weist an einem zweiten Ende 8 ein flaches zweites Abschlusselement 9 auf, das hier mit dem Zylinder 5 verklebt ist, und außerdem mit dem Elektromotor 4 verbunden ist. 23 bedeutet jeweils eine Befestigungsmutter.

Fig. 5 zeigt einen Schnitt durch ein erfindungsgemäßes Kamerasystem 1 entsprechend der in Fig. 4 gezeigten Schnittlinie A-A. Bei dieser Ansicht ist erkennbar, dass sich im Elektromotor 4 ein feststehendes Rohr 25 und ein rotierendes Rohr 18 (Hohlwelle des Elektromotors) befindet. Als rotierbare Kameraeinhausung 3 dient bei dieser Ausführungsform ein transparenter Zylinder 5 mit einem kreisförmigen Querschnitt, der an einem ersten Ende 6 ein abnehmbares flaches erstes Abschlusselement 7 beinhaltet. 24 bedeutet einen O-Ring. Der Zylinder 5 weist an einem zweiten Ende 8 ein flaches zweites Abschlusselement 9 auf, das hier mit dem Zylinder 5 verklebt ist. Im zweiten Abschlusselement 9 ist eine zentrale Öffnung 20 vorhanden, durch welche eine Energieversorgung bzw. eine Signalweiterleitung der Kamera 2 stattfinden kann. 19 bedeutet einen Hohlraum zur Aufnahme eines Kabels für die Energieversorgung der Kamera. 21 bedeutet eine Lamellendichtung. 22 bedeutet einen Klemmblock und 23 bedeutet eine Befestigungsmutter.

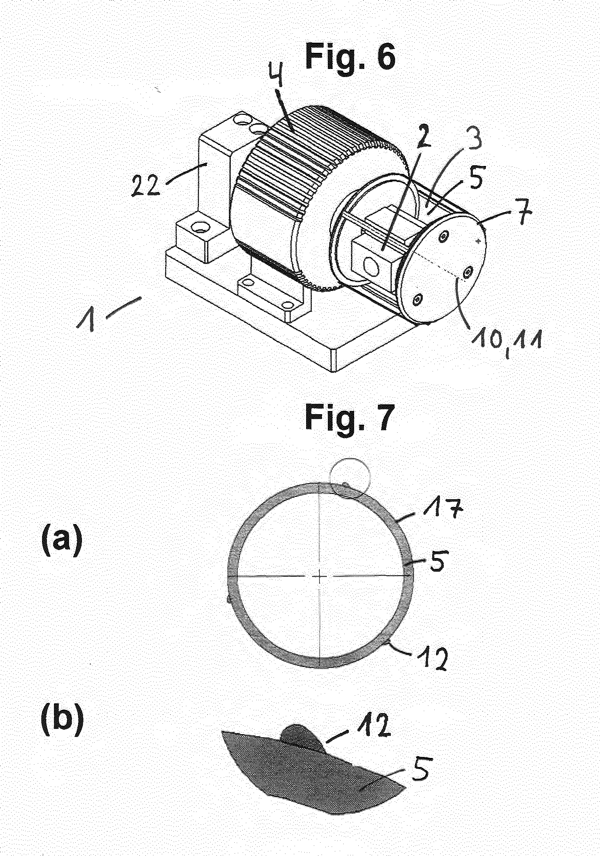

Fig. 6 zeigt eine perspektivische Ansicht eines erfindungsgemäßen Kamerasystems 1. 22 bedeutet einen Klemmblock, 4, einen Elektromotor, 2 eine Kamera, 3 einen Zylinder als Teil der Kameraeinhausung 5. 7 bedeutet ein abnehmbares flaches erstes Abschlusselement an einem ersten Ende von Zylinder 5.

Fig. 7 zeigt in Fig. 7(a) einen Schnitt durch einen in einer Ausführungsform des erfindungsgemäßen Kamerasystems verwendeten Glaszylinder 5, der auf seiner äußeren Oberfläche 17 eine Erhebung 12 aufweist, die als Silikonraupe ausgestaltet ist, die in Fig. 7 (b) in einer vergrößerten Ansicht dargestellt ist.

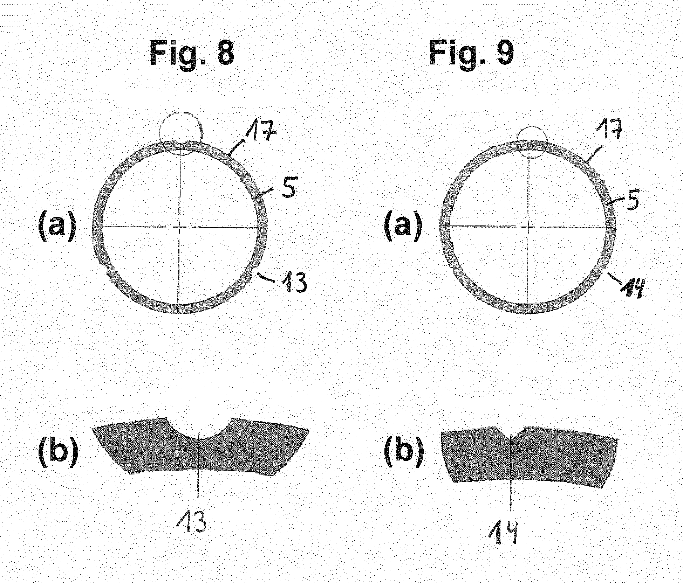

Fig. 8 zeigt in Fig. 8(a) einen Schnitt durch einen in einer anderen Ausführungsform des erfindungsgemäßen Kamerasystems 1 verwendeten Glaszylinder 5, der auf seiner äußeren Oberfläche eine Vertiefung 13 aufweist, die als Rundnut ausgestaltet ist, die in Fig. 8(b) in einer vergrößerten Ansicht dargestellt ist.

Fig. 9 zeigt in Fig. 9(a) einen Schnitt durch einen in einer weiteren Ausführungsform des erfindungsgemäßen Kamerasystems 1 verwendeten Glaszylinder 5, der auf seiner äußeren Oberfläche eine Vertiefung 14 aufweist, die als V-Nut ausgestaltet ist, die in Fig. 9(b) in einer vergrößerten Ansicht dargestellt ist.

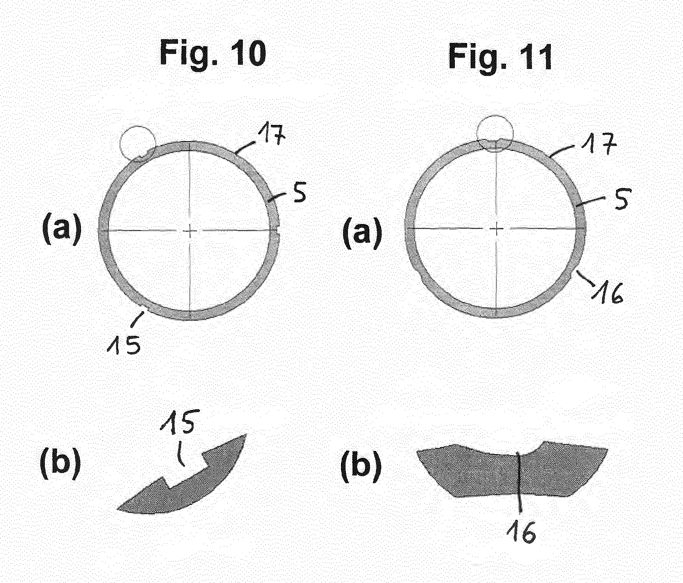

Fig. 10 zeigt in Fig. 10(a) einen Schnitt durch einen in einer anderen Ausführungsform des erfindungsgemäßen Kamerasystems 1 verwendeten Glaszylinder 5, der auf seiner äußeren Oberfläche eine Vertiefung 15 aufweist, die als gerade Nut ausgestaltet ist, die in Fig. 10(b) in einer vergrößerten Ansicht dargestellt ist.

Fig. 11 zeigt in Fig. 11(a) einen Schnitt durch einen in einer weiteren Ausführungsform des erfindungsgemäßen Kamerasystems 1 verwendeten Glaszylinder 5, der auf seiner äußeren Oberfläche eine Vertiefung 16 aufweist, die als Tangentennut ausgestaltet ist, die in Fig. 11(b) in einer vergrößerten Ansicht dargestellt ist.

### Bezugszeichenliste

- 1: Kamerasystem
- 2: Kamera
- 3: Rotierbare teilweise transparente Kameraeinhausung
- 4: Antriebseinrichtung, Elektromotor
- 5: Zumindest teilweise transparenter Zylinder
- 6: Erstes Ende des zumindest teilweise transparenten Zylinders
- 7: Flaches oder gebogenen erstes Abschlusselement
- 8: Zweites Ende des zumindest teilweise transparenten Zylinders
- 9: Flaches oder gebogenen zweites Abschlusselement
- 10: Rotationsachse der Antriebseinrichtung
- 11: Rotationsachse der Kameraeinhausung
- 12: Erhebung (als strukturelle Ausprägung); Silikonraupe
- 13: Vertiefung (als strukturelle Ausprägung); Rundnut
- 14: Vertiefung (als strukturelle Ausprägung); V-Nut
- 15: Vertiefung (als strukturelle Ausprägung); gerade Nut
- 16: Vertiefung (als strukturelle Ausprägung); asymmetrische Nut, Tangentennut
- 17: Äußere Oberfläche der Kameraeinhausung
- 18: Hohlwelle des Elektromotors; rotierendes Rohr
- 19: Hohlraum zur Aufnahme eines Kabels
- 20: zentrale Öffnung im zweiten Abschlusselement für die Durchführung des Kabels
- 21: Labyrinthdichtung
- 22: Klemmbock
- 23: Befestigungsmutter
- 24: O-Ring
- 25: Feststehendes Rohr durch den Elektromotor

## Patentansprüche

1. Kamerasystem (1), enthaltend mindestens eine Kamera (2); eine in einem Sichtfeld vor der Kamera (2) angeordnete, zumindest teilweise transparente, dreidimensionale, rotierbare Kameraeinhausung (3); und eine Antriebseinrichtung (4) für die Rotation der Kameraeinhausung (3), wobei die Kameraeinhausung (3) einen zumindest teilweise transparenten Zylinder (5) mit einem im Wesentlichen kreisrunden Querschnitt beinhaltet, der an einem ersten Ende (6) ein flaches oder gebogenes erstes Abschlusselement (7) aufweist, **dadurch gekennzeichnet, dass** die Kameraeinhausung Glas enthält oder aus Glas besteht und der Zylinder (5) an einem zweiten Ende (8) ein flaches oder gebogenes zweites Abschlusselement (9) aufweist, das mit der Antriebseinrichtung (4) verbunden ist.

2. Kamerasystem (1) nach Anspruch 1, **dadurch gekennzeichnet, dass** der Zylinder (5) und das erste Abschlusselement (7) einstückig ausgebildet sind.

3. Kamerasystem (1) nach einem der Ansprüche 1 bis 2, **dadurch gekennzeichnet, dass** die Kameraeinhausung (3) zumindest teilweise mit einer hydrophoben oder hydrophilen Beschichtung versehen ist.

4. Kamerasystem (1) nach einem der Ansprüche 1 bis 3, dass eine zentrale Linsensystemachse der Kamera (2) senkrecht zu einer Rotationsachse (11) der Kameraeinhausung (3) angeordnet ist.

5. Kamerasystem (1) nach einem der Ansprüche 1 bis 4, **dadurch gekennzeichnet, dass** eine äußere Oberfläche (17) der Kameraeinhausung (3) mindestens eine strukturelle Ausprägung (12,13,14,15,16) aufweist.

6. Kamerasystem (1) nach Anspruch 5, **dadurch gekennzeichnet dass** die strukturelle Ausprägung (12,13,14,15,16) mindestens eine Erhebung (12) aufweist.

7. Kamerasystem (1) nach Anspruch 6, **dadurch gekennzeichnet, dass** die mindestens eine Erhebung (12) eine Silikonraupe ist.

8. Kamerasystem (1) nach einem der Ansprüche 5 bis 7, **dadurch gekennzeichnet, dass** die strukturelle Ausprägung (12,13,14,15,16) mindestens eine Vertiefung (13,14,15,16) aufweist.

9. Kamerasystem (1) nach Anspruch 8, **dadurch gekennzeichnet, dass** die Vertiefung (13,14,15,16) eine Nut in der äußeren Oberfläche (17) ist.

10. Kamerasystem (1) nach Anspruch 9, **dadurch gekennzeichnet, dass** die Nut (13,14,15,16) eine Rundnut (13), eine V-Nut (14), eine gerade Nut (15) oder eine asymmetrische Nut (16) ist.

11. Kamerasystem (1) nach einem der Ansprüche 1 bis 10, **dadurch gekennzeichnet, dass** die Antriebseinrichtung (4) einen Hohlraum (19) zur Aufnahme eines Kabels (19) für die Kamera (2) aufweist.

12. Verfahren zum Betrieb eines Kamerasystems (1) nach Anspruch 1, umfassend einen Schritt des Rotierens der Kameraeinhausung (3) durch Betrieb der Antriebseinrichtung (4) mit einer vorbestimmten Umdrehungszahl.

13. Verfahren nach Anspruch 12, **dadurch gekennzeichnet, dass** die Umdrehungszahl im Bereich von 1000 bis 2000 Umdrehungen pro Minute (UpM) liegt.

## Claims

1. Camera system (1), comprising at least one camera (2); an at least partially transparent, three-dimensional, rotatable camera housing (3) arranged in a field of view in front of the camera (2); and a drive device (4) for the rotation of the camera enclosure (3), wherein the camera enclosure (3) includes an at least partially transparent cylinder (5) with a substantially circular cross-section, which has a flat or curved first end element (7) at a first end (6), **characterized in that** the camera housing includes glass or is made of glass and the cylinder (5) has at a second end (8) a flat or curved second end element (9) which is connected to the drive device (4).

2. Camera system (1) according to claim 1, **characterized in that** the cylinder (5) and the first end element (7) are formed in one piece.

3. Camera system (1) according to any one of claims 1 to 2, **characterized in that** the camera housing (3) is at least partially provided with a hydrophobic or hydrophilic coating.

4. Camera system (1) according to any one of claims 1 to 3, in that a central lens system axis of the camera (2) is arranged perpendicular to a rotation axis (11) of the camera housing (3).

5. Camera system (1) according to any one of claims 1 to 4, **characterized in that** an outer surface (17) of the camera housing (3) has at least one structural embossment (12,13,14,15,16).

6. Camera system (1) according to claim 5, **characterized in that** the structural embossment (12,13,14,15,16) has at least one elevation (12).

7. Camera system (1) according to claim 6, **characterized in that** the at least one protrusion (12) is a silicone bead.

8. Camera system (1) according to any one of claims 5 to 7, **characterized in that** the structural embodiment (12,13,14,15,16) has at least one indentation (13,14,15,16).

9. Camera system (1) according to claim 8, **characterized in that** the indentation (13,14,15,16) is a groove in the outer surface (17).

10. Camera system (1) according to claim 9, **characterized in that** the groove (13,14,15,16) is a round groove (13), a V-groove (14), a straight groove (15) or an asymmetrical groove (16).

11. Camera system (1) according to any one of claims 1 to 10, **characterized in that** the drive device (4) has a cavity (19) for accommodating a cable (19) for the camera (2).

12. Method of operating a camera system (1) according to claim 1, comprising a step of rotating the camera housing (3) by operating the drive means (4) at a predetermined number of revolutions.

13. Method according to claim 12, **characterized in that** the number of revolutions is in the range of 1000 to 2000 revolutions per minute (rpm).

## Revendications

1. Système de caméra (1), comprenant au moins une caméra (2) ; un boîtier de caméra (3) tridimensionnel, rotatif, au moins partiellement transparent, disposé dans un champ de vision devant la caméra (2) ; et un dispositif d'entraînement (4) pour la rotation du boîtier de la caméra (3), dans lequel le boîtier de la caméra (3) comprend un cylindre (5) au moins partiellement transparent avec une section transversale sensiblement circulaire, qui a un premier élément d'extrémité (7) plat ou incurvé à une première extrémité (6), **caractérisé en ce que** le boîtier de la caméra comprend du verre ou est fait de verre et le cylindre (5) a à une deuxième extrémité (8) un deuxième élément d'extrémité (9) plat ou incurvé qui est relié au dispositif d'entraînement (4).

2. Système de caméra (1) selon la revendication 1, **caractérisé en ce que** le cylindre (5) et le premier élément d'extrémité (7) sont formés d'une seule pièce.

3. Système de caméra (1) selon l'une quelconque des revendications 1 à 2, **caractérisé en ce que** le boîtier de la caméra (3) est au moins partiellement pourvu d'un revêtement hydrophobe ou hydrophile.

4. Système de caméra (1) selon l'une quelconque des revendications 1 à 3, **caractérisé par le fait qu'**un axe central du système d'objectif de la caméra (2) est disposé perpendiculairement à un axe de rotation (11) du boîtier de la caméra (3).

5. Système de caméra (1) selon l'une quelconque des revendications 1 à 4, **caractérisé en ce qu'**une surface extérieure (17) du boîtier de caméra (3) présente au moins un relief structurel (12, 13, 14, 15, 16).

6. Système de caméra (1) selon la revendication 5, **caractérisé en ce que** le relief structurel (12,13,14,15,16) présente au moins une élévation (12).

7. Système de caméra (1) selon la revendication 6, **caractérisé en ce que** l'au moins une protubérance (12) est une bille de silicone.

8. Système de caméra (1) selon l'une quelconque des revendications 5 à 7, **caractérisé en ce que** l'élément structurel (12, 13, 14, 15, 16) présente au moins une indentation (13, 14, 15, 16).

9. Système de caméra (1) selon la revendication 8, **caractérisé en ce que** l'indentation (13,14,15,16) est une rainure dans la surface extérieure (17).

10. Système de caméra (1) selon la revendication 9, **caractérisé en ce que** la rainure (13, 14, 15, 16) est une rainure ronde (13), une rainure en V (14), une rainure droite (15) ou une rainure asymétrique (16).

11. Système de caméra (1) selon l'une quelconque des revendications 1 à 10, **caractérisé en ce que** le dispositif d'entraînement (4) comporte une cavité (19) destinée à recevoir un câble (19) pour la caméra (2).

12. Procédé de fonctionnement d'un système de caméra (1) selon la revendication 1, comprenant une étape de rotation du boîtier de la caméra (3) en actionnant le dispositif d'entraînement (4) à un nombre de tours prédéterminé.

13. Procédé selon la revendication 12, **caractérisé en ce que** le nombre de tours est compris entre 1000 et 2000 tours par minute (tr/min).
